# EUROPÄISCHE PATENTSCHRIFT

(11) **EP 0 761 406 B1**
(45) Veröffentlichungstag und Bekanntmachung des Hinweises auf die Patenterteilung: **18.04.2001**
(21) Anmeldenummer: 96111971.6
(22) Anmeldetag: 25.07.1996
(51) Int. Cl.: B29C 45/16

(54) **Vorrichtung zur Herstellung eines Thermoplast-Silikon-Verbundspritzgiessteils**
Apparatus for producing a thermoplastic-silicone composite injection moulded article
Dispositif pour la fabrication d'un article composite moulé par injection en thermoplastique-silicone

(30) Priorität: 07.09.1995 DE 19533137
(43) Veröffentlichungstag der Anmeldung: 12.03.1997
(73) Patentinhaber: Krauss-Maffei Kunststofftechnik GmbH, 80997 München (DE)
(72) Erfinder: Lichtinger, Peter, 82256 Fürstenfeldbruck (DE); Brams, Peter, 80935 München (DE)
(74) Vertreter: Rucker, Bernd

(56) Entgegenhaltungen:
- EP-A- 0 249 336
- WO-A-86/06273
- DE-A- 2 063 850
- PATENT ABSTRACTS OF JAPAN vol. 15, no. 339 (M-1152), 28.August 1991 & JP-A-03 133610 (THREE BOND CO LTD), 6.Juni 1991,
- PATENT ABSTRACTS OF JAPAN vol. 17, no. 410 (M-1455), 30.Juli 1993 & JP-A-05 084780 (SHIN ETSU CHEM CO LTD), 6.April 1993,
- PATENT ABSTRACTS OF JAPAN vol. 96, no. 6, 28.Juni 1996 & JP-A-08 047943 (TOSHIBA SILICONE CO LTD), 20.Februar 1996,

## Beschreibung

Die Erfindung betrifft eine Vorrichtung zur Herstellung eines im Verbund aus Thermoplastmaterial und Silikonmaterial bestehenden Spritzgießteils gemäß Oberbegriff des Patentanspruchs 1 (siehe z.B.WO-A-86/06273).

Bei der Herstellung von derartigen Spritzgießteilen besteht das Problem, daß das Silikonmaterial zum Ausreagieren im Formwerkzeug hoher Heiztemperaturen und langer Heizzeiten bedarf, wobei zwischen Heizzeit und Heiztemperatur eine Abhängigkeit besteht. So kann z.B. das Ausreagieren bei einer Heizzeit von 15 sec und einer Heiztemperatur von 160°C oder bei einer Heizzeit von 5 sec und einer Heiztemperatur von 220°C erfolgen. Da unter diesen Bedingungen die gängigen Arten von Thermoplastmaterial in schmelzeflüssigen Zustand übergehen, kann in der Regel Thermoplastmaterial und Silikonmaterial nicht dadurch zu einem einstückigen Verbund-Spritzgießteil ausgeformt werden, daß bei einem in einem ersten Spritzgießvorgang hergestellten Thermoplast-Spritzgießteil in einem nachfolgenden zweiten Spritzgießvorgang bei erweiterter Formkavität ein zusätzlicher Bestandteil aus Silikonmaterial angespritzt wird. Die im ersten Arbeitsschritt hergestellten Thermoplastteile würden durch die Werkzeugflächen, die auf die für das Silikonmaterial erforderliche Heiztemperatur gebracht werden müssen, zum Schmelzen und somit zur Zerstörung der Formgebung führen.

Es ist zwar grundsätzlich möglich, an Thermoplastteile Silikonteile anzuspritzen, dies allerdings nur unter Verwendung hochtemperaturfester Thermoplastmaterialien, wie z.B. Polytretrafluorethylen (Teflon). Der Nachteil dieser Materialien besteht aber darin, daß diese wesentlich, d.h. bis um das 8-fache teurer sind, als die üblichen Thermoplastmaterialien.

Aus der WO 86/06273 ist eine Vorrichtung zur Herstellung eines im Verbund aus Thermoplastmaterial und Silikonmaterial bestehenden Spitzgießteils bekannt, bei dem in einem ersten Schritt das Thermoplastteil gespritzt wird, das anschließend in eine weitere Spritzgießform überführt wird, mit dessen erweiterter Formkavität das Silikonmaterial an das fertige Thermoplastteil angespritzt wird. Um zu vermeiden, dass das Thermoplastteil durch den Silikonspritzgießvorgang zu stark erwärmt wird und dabei seine Formstabilität verliert, wird der Bereich um die Formkavität gekühlt, wodurch die Formkavität für das Silikonmaterial nur auf einem verhältnismäßig niedrigem Temperaturniveau gehalten werden kann, bei dem die Vernetzung bzw. die Aushärtung des Silikonmaterial sehr langsam abläuft und dementsprechend eine lange Zykluszeit zur Herstellung des aus den beiden Materialien bestehenden Spritzgießteils in Kauf genommen werden muss.

Der Erfindung liegt die Aufgabe zugrunde, bei einer Spritzgießmaschine zur Herstellung von im Verbund aus Thermoplastmaterial und Silikonmaterial bestehenden Spritzgießteilen die Vernetzung bzw. die Aushärtung des aus Silikon bestehenden vernetzenden Elastomers zu beschleunigen und damit die Zykluszeit zur Herstellung eines aus Thermoplastmaterial und Silikonmaterial bestehenden Spritzgießteils zu verkürzen, wobei die Formstabilität des mit Silikonmaterial umspritzten Spritzgießteils aus Thermoplastmaterial erhalten bleibt.

Diese Aufgabe wird erfindungsgemäß durch die im Anspruch 1 angegebene Vorrichtung gelöst. Die abhängigen Ansprüche beziehen sich auf weitere vorteilhafte Merkmale der Erfindung.

Erfindungsgemäß sind nur die die Formkavität für das Silikonteil unmittelbar umschließenden Teile des Silikon-Formwerkzeugs beheizt, die gegenüber den übrigen Teilen des Silikon-Formwerkzeugs unter Zwischenlage von Isolierschichten abgestützt sind. Die beheizten Formpartien des Silikon-Formwerkzeugs sind daher nur auf das unbedingt notwendige Maß beschränkt, wodurch innere Wärmestrahlungsverluste und Wärmeübergangsflächen, die sich negativ auf die Formhaltigkeit des fertigen Thermoplastteils auswirken können, weitestgehend reduziert sind.

Da sich Thermoplastmaterial und Silikonmaterial beim Anspritzen nicht verbinden, sind vorteilhafterweise die Partien des fertigen Verbund-Spritzgießteils, an denen die beiden Materialien aneinander grenzen mit formschlüssiger Formgebung versehen, so daß eine besonders stabile Verbindung erzielt werden kann.

Die Erfindung wird nachfolgend anhand von in der Zeichnung dargestellten Ausführungsbeispielen erläutert. Es zeigen:
- Fig. 1: den Schnitt durch ein Thermoplast-Spritzgießwerkzeug und ein Silikon-Spritzgießwerkzeug, die beide auf den Formaufspannplatten einer Spritzgießmaschine aufgespannt sind,
- Fig. 2: den Halbschnitt durch ein rotationssymmetrisches Verbund-Spritzgießteil mit formschlüssiger Verbindung zwischen Thermpolast- und Silikonteil,
- Fig. 3: den Halbschnitt einer anderen Ausführungsform eines Verbund-Spritzgießteils nach Fig. 2,
- Fig. 4: eine weitere Ausführungsform eines Verbund-Spritzgießteils nach Fig. 2 und
- Fig. 5: eine weitere Ausführungsform eines Verbund-Spritzgießteils nach Fig. 2.

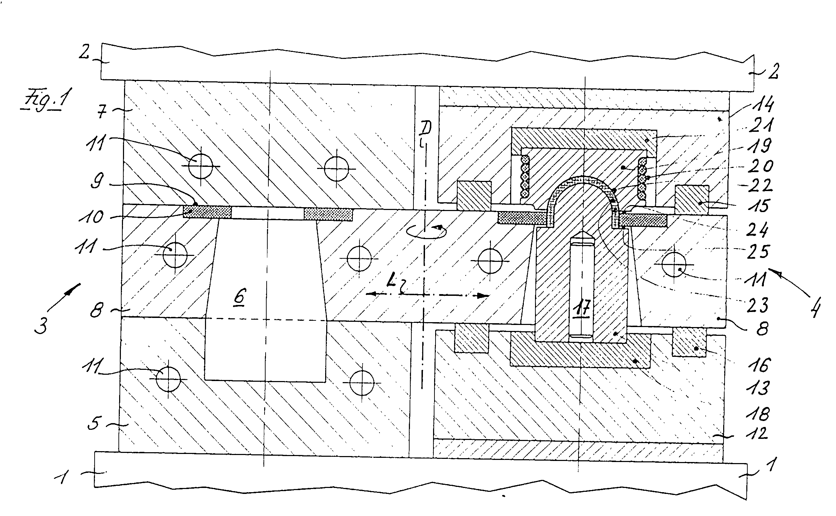

Die Fig. 1 zeigt in Teilstücken eine feste Formaufspannplatte 2 und eine bewegliche Formaufspannplatte 1 einer nicht näher dargestellten Spritzgießmaschine. Auf den beiden Formaufspannplatten 1 und 2 sind ein Thermoplast-Spritzgießwerkzeug 3 und ein Silikon-Formwerkzeug 4 aufgespannt.

Das Thermoplast-Spritzgießwerkzeug 3 besteht aus einer auf der festen Formaufspannplatte 2 aufgespannten ersten Werkzeughälfte 5, an der ein rotationssymmetrisches Einsatzteil 6 befestigt ist, und aus einer auf der beweglichen Formaufspannplatte 1 aufgespannten zweiten Werkzeughälfte 7, an der ein quer zur zweiten Formhälfte 7 verschiebliches Transfer-Werkzeugteil 8 befestigt ist. Das Einsatz-Werkzeugteil 6, das Transfer-Werkzeugteil 8 und die erste Werkzeughälfte 5 schließen eine erste Formkavität 9 ein, in der sich ein fertig gespritztes Thermoplast-Spritzgießteil 10 in Form einer Ringscheibe befindet. Durch die erste und die zweite Werkzeughälfte 5 und 7 sowie durch das Transfer-Werkzeugteil 8 verlaufen Kühlkanäle 11 für ein Kühlmedium.

Das Silikon-Formwerkzeug 4 besteht aus einer auf der festen Formaufspannplatte 2 aufgespannten ersten Formhälfte 12, an der ein rotationssymmetrisches Form-Einsatzteil 13 befestigt ist, und aus einer auf der beweglichen Formaufspannplatte 1 aufgespannten zweiten Formhälfte 14. Sowohl die erste Formhälfte 12 als auch die zweite Formhälfte 14 sind gegenüber dem zwischenliegenden Transfer-Werkzeugteil 8 über Isolierelemente 15 und 16 abgestützt. Das Form-Einsatzteil 13 ist mittels eines Heizeinsatzes 17 beheizt und gegenüber der ersten Formhälfte 12 über eine Isolierschicht 18 abgestützt. Die zweite Formhälfte 14 trägt ein Formteil 19, das mittels Heizelementen 20 beheizt und gegenüber der zweiten Formhälfte 14 über eine Isolierschicht 21 abgestützt ist.

Das Formteil 19 und das Form-Einsatzteil 13 umschließen eine zweite Formkavität 22 in der sich der aus Silikonmaterial gespritzte Anteil 23 befindet, der an ein vorher im Thermoplast-Spritzgießwerkzeug 3 gefertigtes Thermoplast-Spritzgießteil 10 angespritzt ist. Zwischen dem Form-Einsatzteil 13 und dem Thermoplast-Spritzgießteil 10 einerseits und dem Formteil 19 und dem Thermoplast-Spritzgießteil 10 andererseits befinden sich jeweils Luftspalte 24 und 25, deren Dicke so bemessen ist, daß sie zum einen als Isolierschicht wirken, zum anderen aber kein Silikonmaterial eindringen lassen.

Die zwei Formkavitäten 9, die vom Transfer-Werkzeugteil 8 teilweise umschlossen werden, sind durch eine Drehbewegung um die Drehachse D wechselweise von einer Position im Thermoplast-Spritzgießwerkzeug 3 in eine Position im Silikon-Formwerkzeug 4 verstellbar. Anstelle einer Drehbewegung kann das Transfer-Werkzeugteil 8 auch mittels eines Linearantriebes zwischen den beiden Positionen in Richtung des Pfeiles L hin und her bewegt werden.

Im Betrieb wird zunächst im Thermoplast-Spritzgießwerkzeug 3 das Thermoplast-Spritzgießteil 10 hergestellt, das dann mittels des Transfer-Werkzeugteils 8 in die Position im Silikon-Spritzgießwerkzeug 4 gebracht wird, wo in der an das Thermoplast-Spritzgießteil 10 anschließenden zweiten Formkavität 22 ein Silikon-Anteil 23 angespritzt wird. Zum Verfahren des Transfer-Werkzeugteils 8 werden die beiden Formträgerplatten 1 und 2 soweit auseinadergefahren, daß das Transfer-Werkzeugteil 8 ungehindert quer an dem hervorstehenden Einsatz-Werkzeugteil 6 und dem Form-Einsatzteil 13 vorbeibewegt werden kann.

Bei dem in Fig. 1 dargestellten Verbund-Spritzgießteil handelt es sich um eine Ringscheibe aus Thermoplastmaterial in dessen zentraler Öffnung ein halbkugelförmiges Teil aus Silikon angespritzt ist.

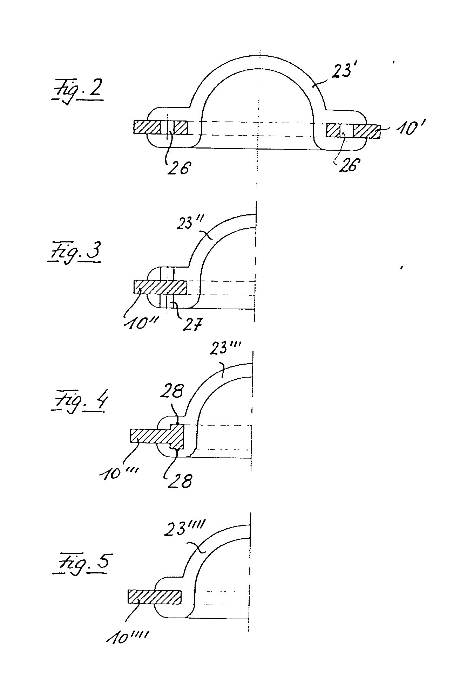

Das in Fig. 2 dargestellte Verbund-Spritzgießteil besteht ebenfalls aus einer Ringscheibe 10' aus Thermoplastmaterial und einem angespritzten halbkugelförmigen Teil 23' aus Silikonmaterial. An der Kontaktstelle sind die beiden Teile dadurch formschlüssig miteinander verbunden, daß im inneren Öffnungsrand der Ringscheibe 10' ausgebildete Bohrungen 26 mit Silikonmaterial vergossen sind.

In dem in Fig. 3 dargestellten Verbund-Spritzgießteil ist die formschlüssige Verbindung dadurch hergestellt, daß im inneren Öffnungsrand der Ringscheibe 10'' angeformte Stifte 27 aus Thermoplastmaterial mit Silikonmaterial umgossen sind.

In dem in Fig. 4 dargestellten Verbund-Spritzgießteil ist die formschlüssige Verbindung dadurch hergestellt, daß im inneren Öffnungsrand der Ringscheibe 10''' ausgebildete Wulste 28 mit Silikonmaterial umgossen sind.

In dem in Fig. 5 dargestellten Verbund-Spritzgießteil ist die formschlüssige Verbindung dadurch hergestellt, daß der innere öffnungsrand der Ringscheibe beidseitig mit Silikonmaterial umgossen ist.

## Patentansprüche

1. Vorrichtung zur Herstellung eines im Verbund aus Thermoplastmaterial und Silikonmaterial bestehenden Spritzgießteils, insbesondere eines Spritzgießteils mit Thermoplastmaterial mit niedriger Schmelztemperatur, mit einem Thermoplast-Spritzgießwerkzeug mit einer ersten Formkavität für das Thermoplastmaterial und mit einem Silikon-Formwerkzeug mit einer zweiten Formkavität für das Silikonmaterial, wobei das Thermoplast-Spritzgießwerkzeug (3) ein Transfer-Werkzeugteil (8) aufweist, mit dem das fertig gespritzte Thermoplast-Spritzgießteil (10) in die zweite Formkavität (22) für das Silikon-Spritzgießteil nach der Maßgabe integrierbar ist, dass die Teile des Silikon-Formwerkzeugs (4) das Thermoplast-Spritzgießteil (10) unter weiterstgehender Vermeidung von Wärmeübergang vom Silikon-Formwerkzeug (4) aufdas ThermoplastSpritzgießteil (10) einschließen, **dadurch gekennzeichnet,** dass nur die die zweite Formkavität (22) unmittelbar umschließenden Teile (13, 19) des Silikon-Formwerkzeugs (4) beheizt (17, 20) sind, die gegenüber den übrigen Teilen des Silikon-Formwerkzeugs (4) unter Zwischenlage von Isolierschichten (18, 21) abgestützt sind.

2. Vorrichtung nach Anspruch 1 , **dadurch gekennzeichnet**, dass zwischen den Formteilen des Silikon-Formwerkzeugs (4) und dem das Thermoplast-Spritzgießteil (10) tragenden Transfer-Werkzeugteil (8) Isolierelemente (15,16) angeordnet sind.

3. Vorrichtung nach Anspruch 2, **dadurch gekennzeichnet**, dass die Isolierelemente (15, 16) aus Keramik bestehen.

4. Vorrichtung nach einem der Ansprüche 2 oder 3, **dadurch gekennzeichnet**, dass die Isolierelemente (15,16) Abstandselemente sind, mit denen die Formteile der Silikon-Formwerkzeuge (4) in Bezug auf das Transfer-Werkzeugteil (8) und auf das Thermoplast-Spritzgießteil (10) so in Abstand gehalten sind, dass eine drucklose Berührung gegeben ist oder ein Luftspalt (24,25) eingeschlossen wird.

5. Vorrichtung nach Anspruch 4, **dadurch gekennzeichnet** dass, die Luftspaltedicke unter Berücksichtigung der Kapillarität des Silikon-Schmelzematerials nach der Maßgabe bestimmt ist, dass kein Silikon-Schmelzematerial in die Luftspalte (24,25) eindringt.

6. Vorrichtung nach einem der Ansprüche 1 bis 5, **dadurch gekennzeichnet**, dass das Transfer-Werkzeugteil (8) gekühlt ist.

7. Vorrichtung nach einem der Ansprüche 1 bis 6 **dadurch gekennzeichnet**, dass das TransferWerkzeugteil (8) mittels einer Drehvorrichtung mit der Drehachse (D) zwischen der Position im Thermoplast-Formwerkzeug (3) und der Position im Silikon-Formwerkzeug (4) hin und her bewegbar ist.

8. Vorrichtung nach einem der Ansprüche 1 bis 6, **dadurch gekennzeichnet**, dass das Transfer-Werkzeugteil (8) mittels eines Linearantriebes translatorisch zwischen der Position im Thermoplast-Formwerkzeug (3) und der Position im Silikon-Formwerkzeug (4) hin und her (L) bewegbar ist.

9. Vorrichtung nach einem der Ansprüche 1 bis 8, **dadurch gekennzeichnet**, dass sowohl das Thermoplast-Spritzgießwerkzeug (3) als auch das Silikon-Formwerkzeug (4) gemeinsam auf den Formaufspannplatten (1,2) einer Spritzgießmaschine aufgespannt sind.

10. Vorrichtung nach einem der Ansprüche 1 bis 9, **dadurch gekennzeichnet**, dass das Thermoplast-Spritzgießteil (10,10',10",10"',10"") an den Verbundstellen zum Silikon-Spritzgießteil (23,23',23",23'", 23"") nach der Maßgabe ausgeformt ist, dass sich eine formschlüssige Verbindung zwischen Thermoplast-Spritzgießteil (10) und Silikon-Spritzgießteil ergibt.

11. Vorrichtung nach Anspruch 10, **dadurch gekennzeichnet**, dass das Thermoplast-Spritzgießteil (10') Durchbrüche (26) aufweist, die mit Silikonmaterial ausgefüllt sind, das zu beiden Seiten der Durchbrüche (26) mit dem übrigen Silikon-Spritzteil (23') verbunden ist.

12. Vorrichtung nach Anspruch 10 oder 11, **dadurch gekennzeichnet,** dass das Thermoplast-Spritzteil (10"') Hinterschneidungen (28) ausgeformt hat, die mit Silikonmaterial formschlüssig hinterspritzbar sind.

## Claims

1. Device for producing an injection moulded part consisting of a composite of thermoplastic material and silicon material, in particular an injection moulded part with thermoplastic material with a low melting point, with a thermoplastic injection moulding tool with a first mould cavity for the thermoplastic material and with a silicon mould with a second mould cavity for the silicon material, the thermoplastic injection moulding tool (3) having a transfer mould part (8) with which the injected thermoplastic injection moulded part (10) can be integrated into the second mould cavity (22) for the silicon injection moulded part in such a way that the parts of the silicon mould (4) enclose the thermoplastic injection moulded part (10) so as to avoid the transmission of heat from the silicon mould (4) to the thermoplastic injection moulded part (10) as far as possible, characterised in that only the parts (13, 19) of the silicon mould (4) immediately surrounding the second mould cavity (22) are heated (17, 20) which parts are supported with respect to the other parts of the silicon mould (4) with insertion of insulating layers (18, 21).

2. Device according to claim 1, characterised in that insulating elements (15, 16) are arranged between the mould parts of the silicon mould (4) and the transfer mould part (8) supporting the thermoplastic injection moulded part (10).

3. Device according to claim 2, characterised in that the insulating elements (15, 16) consist of ceramic.

4. Device according to one of claims 2 or 3, characterised in that the insulating elements (15, 16) are spacing elements with which the mould parts of the silicon mould (4) are held at a distance from the transfer mould part (8) and from the thermoplastic injection moulded part (10) in such a way that pressure-free contact is achieved or an air gap (24, 25) is enclosed.

5. Device according to claim 4, characterised in that the air gap thickness is determined by taking into account the capillarity of the silicon melt material in such a way that no silicon melt material penetrates into the air gap (24, 25).

6. Device according to one of claims 1 to 5, characterised in that the transfer mould part (8) is cooled.

7. Device according to one of claims 1 to 6, characterised in that the transfer mould part (8) can be moved to and fro between the position in the thermoplastic mould (3) and the position in the silicon mould (4) by means of a rotary device with the axis of rotation (D).

8. Device according to one of claims 1 to 6, characterised in that the transfer mould part (8) can be moved to and fro (L) between the position in the thermoplastic mould (3) and the position in the silicon mould (4) in a translatory manner by means of a linear drive.

9. Device according to one of claims 1 to 8, characterised in that both the thermoplastic injection moulding tool (3) and the silicon mould (4) are jointly clamped on the mould platens (1, 2) of an injection moulding machine.

10. Device according to one of claims 1 to 9, characterised in that the thermoplastic injection moulded part (10, 10', 10", 10"', 10"") is shaped at the bonding points from the silicon injection moulded part (23, 23', 23", 23"', 23"") such that a connection with interlocking fit is produced between thermoplastic injection moulded part (10) and silicon injection moulded part.

11. Device according to claim 10, characterised in that the thermoplastic injection moulded part (10') has apertures (26) which are filled with silicon material, which material is connected on both sides of the apertures (26) to the other silicon injection moulded part (23').

12. Device according to claim 10 or 11, characterised in that the thermoplastic injection moulded part (10"') has shaped undercuts (28) which can be sprayed from behind with silicon material to produce an interlocking fit.

## Revendications

1. Dispositif pour la fabrication d'une pièce moulée par injection composée d'un composite de matériau thermoplastique et de matériau silicone, en particulier une pièce moulée par injection avec un matériau thermoplastique ayant une température de fusion basse, avec un outil de moulage par injection de thermoplastique ayant une première empreinte pour le matériau thermoplastique et avec un outil de formage de silicone ayant une deuxième empreinte pour le matériau silicone, dans lequel l'outil de moulage par injection de thermoplastique (3) présente une partie outillage de transfert (8) avec laquelle la pièce en thermoplastique moulée par injection finie (10) peut être intégrée dans la deuxième empreinte (22) pour la pièce en silicone moulée par injection, avec la particularité que les parties de l'outil de formage de silicone (4) contiennent la pièce en thermoplastique moulée par injection (10) en évitant le plus possible le transfert de chaleur de l'outil de formage de silicone (4) à la pièce en thermoplastique moulée par injection (10), caractérisé en ce que seules sont chauffées (17, 20) les parties (13, 19) de l'outil de formage de silicone (4) entourant immédiatement la deuxième empreinte (22), qui sont en appui en face des autres parties de l'outil de formage de silicone (4) avec interposition de couches isolantes (18, 21).

2. Dispositif selon la revendication 1, caractérisé en ce que des éléments isolants (15, 16) sont disposés entre les parties moulantes de l'outil de formage de silicone (4) et la partie outillage de transfert (8) qui porte la pièce en thermoplastique moulée par injection (10).

3. Dispositif selon la revendication 2, caractérisé en ce que les éléments isolants (15, 16) sont en céramique.

4. Dispositif selon l'une des revendications 2 ou 3, caractérisé en ce que les éléments isolants (15, 16) sont des éléments écarteurs permettant de maintenir les parties moulantes de l'outil de formage de silicone (4) par rapport à la partie outillage de transfert (8) et par rapport à la pièce en thermoplastique moulée par injection (10) à une distance telle qu'un contact sans pression est assuré ou qu'un jeu (24, 25) est inclus.

5. Dispositif selon la revendication 4, caractérisé en ce que l'épaisseur du jeu est déterminée en tenant compte de la capillarité du matériau silicone en fusion, de telle sorte qu'aucun matériau silicone en fusion ne pénètre dans le jeu (24, 25).

6. Dispositif selon l'une des revendications 1 à 5, caractérisé en ce que la partie outillage de transfert (8) est refroidie.

7. Dispositif selon l'une des revendications 1 à 6, caractérisé en ce que la partie outillage de transfert (8) peut effectuer, à l'aide d'un dispositif tournant selon l'axe de rotation (D), un mouvement de va-et-vient entre la position dans l'outil de formage de thermoplastique (3) et la position dans l'outil de formage de silicone (4).

8. Dispositif selon l'une des revendications 1 à 6, caractérisé en ce que la partie outillage de transfert (8) peut effectuer, à l'aide d'un entraînement linéaire, un mouvement de va-et-vient (L) en translation entre la position dans l'outil de formage de thermoplastique (3) et la position dans l'outil de formage de silicone (4).

9. Dispositif selon l'une des revendications 1 à 8, caractérisé en ce que l'outil de moulage par injection de thermoplastique (3) comme l'outil de formage de silicone (4) sont bridés conjointement sur les plateaux porte-outillages (1, 2) d'une machine de moulage par injection.

10. Dispositif selon l'une des revendications 1 à 9, caractérisé en ce que la pièce en thermoplastique moulée par injection (10, 10', 10", 10"', 10"") est démoulée au niveau des liaisons composites avec la pièce en silicone moulée par injection (23, 23', 23", 23"', 23"") de manière à avoir une liaison positive entre la pièce en thermoplastique moulée par injection (10) et la pièce en silicone moulée par injection.

11. Dispositif selon la revendication 10, caractérisé en ce que la pièce en thermoplastique moulée par injection (10') présente des perforations (26) remplies par du matériau silicone qui est relié des deux côtés des perforations (26) au reste de la pièce moulée en silicone (23').

12. Dispositif selon la revendication 10 ou la revendication 11, caractérisé en ce que la pièce en thermoplastique moulée par injection (10"') possède des contre-dépouilles (28) venant de moulage qui peuvent être surmoulées selon un engagement positif avec du matériau silicone.
